# EUROPEAN PATENT SPECIFICATION

(11) **EP 3 930 970 B1**
(45) Date of publication and mention of the grant of the patent: **26.07.2023**
(21) Application number: 20713966.8
(22) Date of filing: 28.02.2020
(51) Int. Cl.: B25J 15/06, B25J 15/00, B25J 19/02, B25J 9/16, B25J 15/04, B23D 35/00, B65G 47/92

(54) **GRIPPING GROUP FOR TOOLS AND RESPECTIVE METHOD**
GREIFGRUPPE FÜR WERKZEUGE UND ENTSPRECHENDES VERFAHREN
GROUPE DE PRÉHENSION POUR OUTILS ET PROCÉDÉ ASSOCIÉ

(30) Priority: 28.02.2019 IT 201900002901
(43) Date of publication of application: 05.01.2022
(73) Proprietor: Faspar S.p.A., 20087 Robecco sul Naviglio (MI) (IT)
(72) Inventor: AIME, Paolo Ottavio, 20087 Robecco sul Naviglio (MI) (IT); AIME, Maddalena Lucia, 20087 Robecco sul Naviglio (MI) (IT); GRASSI, Alessandro, 20087 Robecco sul Naviglio (MI) (IT)
(74) Representative: IP Sextant s.r.l.
(86) International application number: PCT/IB2020/051710
(87) International publication number: WO 2020/174449

(56) References cited:
- EP-A1- 2 193 890
- WO-A1-2004/098839
- DE-A1-102014 014 918

## Description

The present invention relates to a gripping group for tools comprising magnetizable material, in particular cutting blades housed on projecting shafts of a storage. The present invention also relates to a gripping method for those tools.

In the description and in the following claims explicit reference will be made to tools such as circular or annular cutting blades, separators, etc. that can be used for the processing of sheets of metallic material wound in coils, but the person skilled in the art will have no difficulty in understanding that the present invention can be easily implemented also in other technical fields, in particular in all those fields wherein it is necessary to pick up objects that comprise magnetisable material, optionally placed on projecting shafts of a storage, comprising projecting arms.

In the field of processing of sheets of metallic material, it is known that the employed tools, when not in use, are stored in a storage, hung to one or more tool-holder shafts projecting from a wall or from an upright which is rotatably mounted on a base. These tools are often in contact with other tools hanging from the same tool-holder shaft of the storage (usually comprising one or more projecting arms) or anyway they are at a close distance therebetween.

When the tools are to be used, they are picked up one by one by means of a robot having a gripping end traditionally comprising: a circular shaped electromagnet, wherein a central hole is formed, and a mechanical gripping device, linearly displaceable within the central hole delimited by the electromagnet (for example as taught in EP 2193890). The electromagnet of the robot gripping end is configured to be current controlled so that it can attract and retain one tool, positioned at the free end of the storage tool-holder shaft, at one face of the tool directed toward the gripping end, and to allow demagnetization of the same tool, which could also be carried out once the gripping device, linearly translating inside the central hole of the electromagnet, has picked the tool up. Once the tool is picked up, it will be moved by the robot on a temporary parking arm. The robot, then, if necessary, will move inside the storage at one new tool to be picked up and will proceed according to the method described above.

The above mentioned traditional method for gripping the tool suffers from a number of drawbacks.

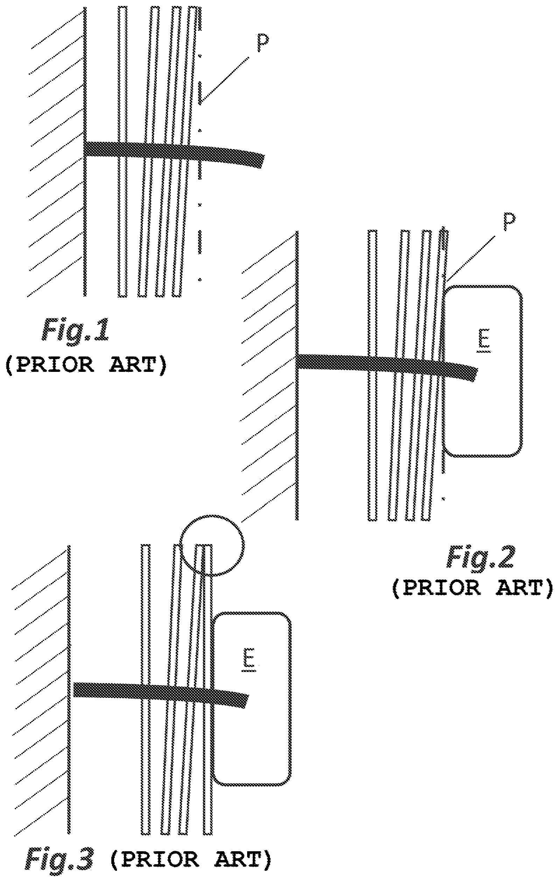

Firstly, it is necessary to consider that the weight of the tools used for this type of applications tends to bend downwards, albeit slightly, the free end of the tool-holder shaft, whereby the tool closer to the free end of the storage tool-holder shaft (which hereinafter will be referred to only as the "tool" or the "tool to be picked up") and the tools adjacent thereto show their face directed toward the free end of the tool-holder shaft, hereinafter called the "gripping face", inclined with respect to one vertical plane P (see Figure 1 of the known art).

When it is necessary to pick up one tool from the respective tool-holder shaft, the electromagnet of the traditional gripping end is placed at the tool itself, so as to delimit one gripping plane directed toward the tool, which lies (the gripping plane) on the substantially vertical plane P (see Figure 2 of the prior art wherein the electromagnet is indicated with the letter E). Since the tool to be picked up is inclined with respect to said vertical plane, having the top end thereof closer to the electromagnet with respect to its bottom end, when the electromagnet of the traditional gripping end will be activated and will attract the tool, the tool, due to the effect of the magnetic field generated by the electromagnet will undergo an attraction force that will change its position on the shaft, by turning around its point of contact with the shaft, and will be placed into contact with the electromagnet along the vertical plane P (see Figure 3 of the known art). In this circumstance, the tool to be picked up and the tool immediately adjacent thereto, if they are at a too close distance, will collide at their top end with consequent damaging of the same. This drawback is very important, because it involves the need to frequently replace the tools that are picked up according to the traditional modalities, in order to prevent that their reduced quality, due to damages caused by collisions with adjacent tools in the storage, impact production carried out therewith.

It will also be noted that the collisions described above between adjacent tools can occur even in the case wherein the tool-holder shaft is not bent downwards at the free end thereof, whereby the gripping face of the tool to be picked up lies on the vertical plane P or a plane parallel thereto, but the electromagnet of the gripping end has its gripping plane facing the tool that is not perfectly parallel to said vertical plane P. In other words, the problem highlighted above is found in any case wherein there is not a perfect parallelism between the gripping face of the tool to be picked up and the gripping plane of the electromagnet of the robot gripping end.

There is therefore the need to overcome the aforesaid drawback and the main object of the present invention is to provide a gripping group for tools and a corresponding gripping method, allowing to pick up the tools supported by a storage projecting shaft in an effective, accurate, easy to implement and economical way, avoiding that they might touch and, thus, avoiding frequent and costly interventions of replacement or maintenance of the tools themselves.

It is therefore a specific object of the present invention a gripping group for at least one tool comprising at least one magnetizable material, said tool being configured to be supported by at least one projecting shaft of a storage and having one respective gripping face, facing one free end of said at least one projecting shaft, the gripping face delimiting at least one plurality of regions, the gripping group comprising:
- at least one gripping head including:
   - at least one support element, having a first face configured to be directed toward said gripping face of said tool;
   - at least two electromagnets, supported by said at least one support element, at said first face thereof, and placed thereon in such a way as to delimit at least one gripping plane at exposed ends thereof configured to generate one respective magnetic field, wherein when said at least one gripping plane is directed toward the gripping face of said tool each one of the least two electromagnets is configured to be placed at one respective region of said plurality of regions of said gripping face of said tool and to generate said respective magnetic field toward the respective region of said gripping face of said tool;
- at least one data control and processing unit operatively connected to said at least two electromagnets;
   characterized in that
   said at least one data control and processing unit is configured to selectively activate said at least two electromagnets by sending respective magnetization signals, in response to which said at least two electromagnets are configured to generate said respective magnetic fields independently from one another.

According to another aspect of the invention, said magnetization signal can be one signal having a waveform and/or a duration and/or an intensity that depend on a distance of each electromagnet from the respective region of the gripping face of said tool and/or the weight of said tool.

According to a further aspect of the invention, said at least one data control and processing unit can be configured to selectively activate said at least two electromagnets by sending respective demagnetization alternating signals having optionally linearly decreasing intensity, starting from a maximum intensity, optionally up to zero, having duration and/or maximum intensity and/or frequency depending on a distance of each electromagnet from the respective region of the gripping face of said tool and/or the weight of said tool.

According to an additional aspect of the invention, said support element can comprise at least one lateral surface and each electromagnet can comprise at least two portions of ferromagnetic material, configured to be magnetized with opposite sign, arranged parallel to each other orthogonally with respect to said at least one lateral surface of said support element.

According to another aspect of the invention, said support element can comprise at least one plurality of portions configured to be coupled with each other in a removable manner and/or at an adjustable mutual distance, said support element being configured to have a first operating configuration, wherein the portions of the plurality of portions are brought close to each other and form a single body, optionally delimiting one through opening, and at least one second working configuration, wherein the portions of the plurality of portions are spaced apart.

According to a further aspect of the invention, said gripping group can comprise at least one contact sensor, mounted on said support element and operatively connected to said at least one data control and processing unit and configured to emit at least one signal toward said at least one data control and processing unit, correlated to one contact which has occurred or otherwise, between said at least one tool and said at least one respective electromagnet.

According to an additional aspect of the invention, said gripping group can comprise at least one proximity sensor, optionally of the laser type, supported by said support element and operatively connected to said at least one data control and processing unit and configured to emit at least one signal toward said at least one data control and processing unit, related to one distance from said at least one tool.

According to another aspect of the invention, said gripping group can comprise at least one flow delivery device, supported by said support element in proximity of said at least one gripping plane, in such a way that one delivery end thereof is directed radially away from one axis of symmetry x-x of said at least one support element, toward one space region, surrounding the said at least one gripping plane, the space region being opposite to said at least one support element, said at least one delivery device being operatively connected to said at least one data control and processing unit and configured to deliver at least one air flow of the laminar type so that, when said at least one tool is at said at least one gripping plane, close to or in contact with at least one other tool on said at least one projecting shaft, the delivered air flow can contribute to increase the distance between said at least one tool and said at least one other tool close thereto or can contribute to separate said at least one tool and said at least one other tool attached thereto, also eliminating from said at least one other tool any impurity present on its gripping face toward said gripping plane.

According to a further aspect of the invention, said gripping group can comprise at least one mechanical gripping device for said tool configured to be moved along a moving axis between a rest position, wherein it is at a distance from said gripping plane of said gripping head, and one working position, wherein it is located at said gripping plane of said gripping head.

It is also a further specific object of the invention a gripping method for at least one tool comprising at least one magnetisable material through one gripping group as mentioned above, said tool being supported by at least one projecting shaft of a storage and having one respective gripping face delimiting at least one plurality of regions, the gripping method comprising the following operational steps:
A. advancing along one movement direction y-y said at least one gripping head, with said gripping plane facing said gripping face of said tool so that said at least two electromagnets are each at a respective region of said at least one plurality of regions of said gripping face;
B. selectively activating, by means of said at least one data control and processing unit, said at least two electromagnets in such a way that each one generates, at the corresponding region of said gripping face, a respective magnetic field and each region undergoes a respective attraction magnetic force as an effect of the respective magnetic field, each attractive magnetic force being configured not to change an attitude of said tool on said projecting shaft and translating said tool on said projecting shaft;
C. retracting along said movement direction y-y said at least one gripping head thereby causing said tool to translate on said projecting shaft toward said gripping head substantially without changing its attitude.

According to another aspect of the invention, said step B can comprise selectively activating said at least two electromagnets alternatively or simultaneously.

According to one further aspect of the invention, said step B can comprise selectively activating said at least two electromagnets alternatively based on their distance from the respective regions of said gripping face of said tool.

According to an additional aspect of the invention, said step B can comprise selectively activating said at least two electromagnets simultaneously by applying to each one, by means of said data control and processing unit, a respective distinct magnetization signal, whereby the magnetic attraction force applied to the respective regions of said gripping face of said tool causes said tool to translate on said projecting shaft without varying its attitude.

According to another aspect of the invention, said method can comprise a subsequent step D of selective activation of said electromagnets, when said tool has travelled on said projecting shaft at least one predefined safety distance, said selective activation of said electromagnets causing the change of said attitude of said tool, whereby it moves on the gripping plane into contact with each one of said electromagnets of said gripping head.

According to a further aspect of the invention, said method can comprise one step A1, prior to step B, of measuring the distance of each electromagnet with respect to the corresponding region of said gripping face of said tool to be gripped, said step optionally comprising the activation of said at least one proximity sensor.

According to an additional aspect of the invention, said method can comprise one step C1 of cleaning said tool to be gripped and spacing it with respect to another tool near or into contact thereto, preliminary to or in conjunction with said step D, comprising the activation of said flow delivery device.

According to another aspect of the invention, said method can comprise one step E of demagnetization of said tool, when into contact with said electromagnets of said gripping head, comprising the selective activation of said electromagnets by sending respective demagnetisation signals.

The present invention will be now described, for illustrative but not limiting purposes, according to its preferred embodiments, with particular reference to the Figures of the accompanying drawings, wherein:
Figures 1 to 3 show respective picking steps of one tool from a storage projecting shaft, according to the prior art;
Figure 4 shows one tool, in particular a cutting blade, which can be picked up by the gripping group according to the present invention;
Figures 5 to 7 illustrate one front view, one first perspective view and one second perspective view, respectively, of the gripping head of a first embodiment of the gripping group according to the present invention;
Figure 8 shows a perspective view of the gripping head of a second embodiment of the gripping group according to the present invention;
Figure 9 shows a front view of the gripping head of a third embodiment of the gripping group of the present invention;
Figures 10 to 12 illustrate optional details of the gripping head of the gripping group according to the invention, in particular mounted on a gripping head shown in Figures 5-7;
Figures 13 and 14 are not scaled perspective views of the gripping group of a robot, according to the invention, comprising, respectively, the gripping head shown in Figures 5-7 and the gripping head of Figure 8;
Figures 15 and 16 show the evolution of a control signal of an electromagnet of the gripping group according to the invention, respectively during one magnetization and demagnetization step of one tool; and
Figures 17 to 19 show respective representations of main steps for picking up one tool from a storage projecting shaft, through a gripping group according to the invention.

In the enclosed Figures the same reference numerals will be used for similar elements.

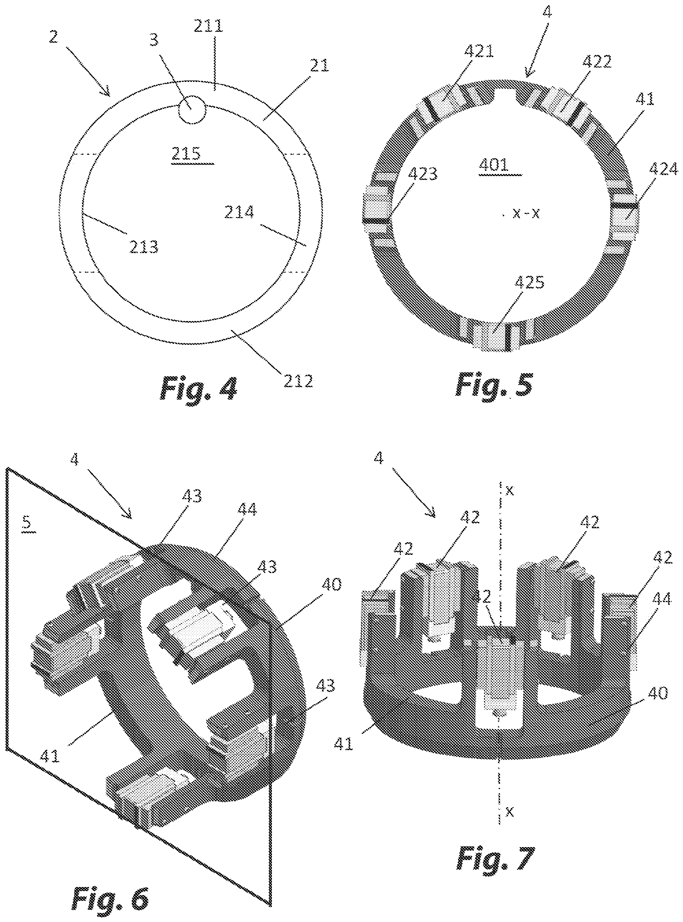

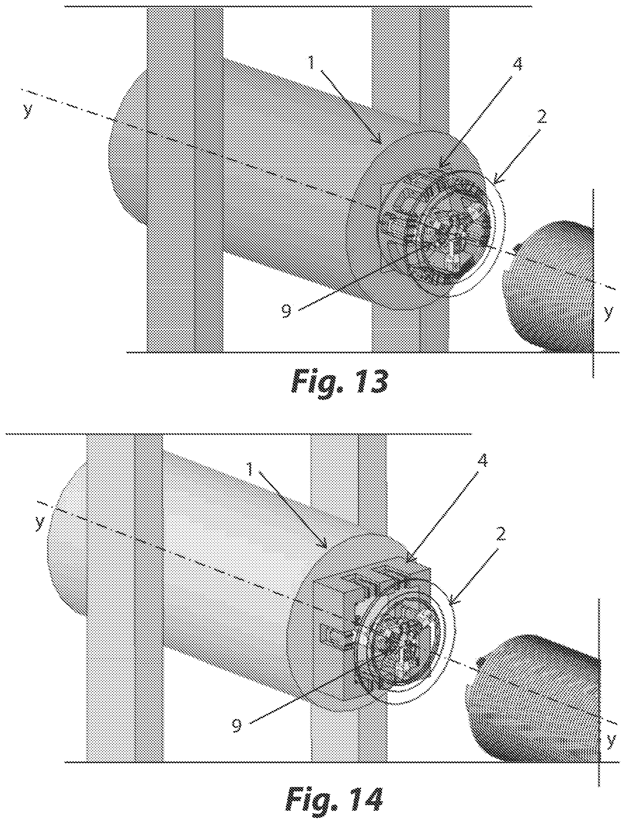

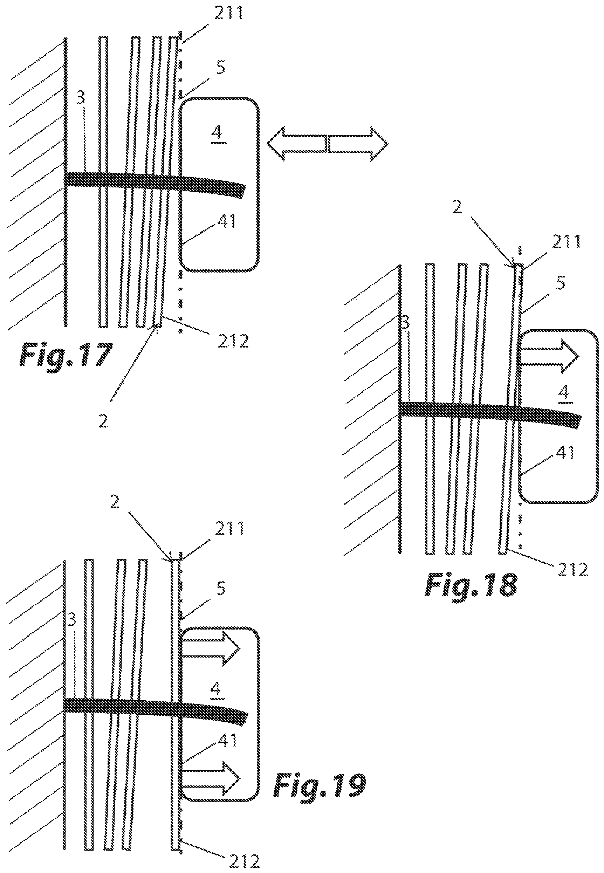

With particular reference to the accompanying drawings, it will be noted that a gripping group according to the present invention is generally indicated by the reference number 1 (see in particular Figures 13 and 14) and is particularly suitable for picking up one tool 2 (shown transparently in the Figures above, as well as depicted in Figure 4) comprising at least one magnetizable material, when this is supported by at least one storage projecting shaft 3 having one end 31 that is constrained, for example to one wall or to an upright rotatably mounted on one base, and the opposite end 32 that is free (see figures 17 to 19). Such a tool 2 which, as mentioned above, can be for example one tool such as a cutting blade for processing sheets of metallic material, having a configuration in plan view substantially circular or annular around one orthogonal axis w-w (Figure 4), comprises one respective flat gripping face 21 defining one plurality of regions, in the case illustrated in Figure 4, for example, a top region 211, a bottom region 212 and two central regions 213 and 214, comprised between the top and bottom regions. In the specific case, the tool 2 also delimits one central through opening 215, at which it is hung to the shaft 3. However, it will be easily understood that the present invention can be implemented for gripping tools having different configuration, for example, oval tools or shaped as an 8, a star, etc., as long as they have a through opening (also not central) at the orthogonal axis w-w, through which opening the tools can be hung directly onto a projecting shaft 3 of a storage and it will also be understood that the regions indicated above are provided purely by way of example and the gripping face 21 of a tool 2 can delimit an arbitrary number of regions, even greater than those indicated in the figures.

The gripping group 1 according to the invention advantageously comprises at least one gripping head 4 including at least one support element 40, having a first face 41 configured to face, in use, the gripping face 21 of the tool 2 to be picked up and at least two electromagnets (generally indicated in the Figures with reference 42 and individually in Figure 5 with the references 421, 422, 423, 424 and 425), mounted on the support element 40, for example at respective housing seats 43 therein formed, at the first face 41.

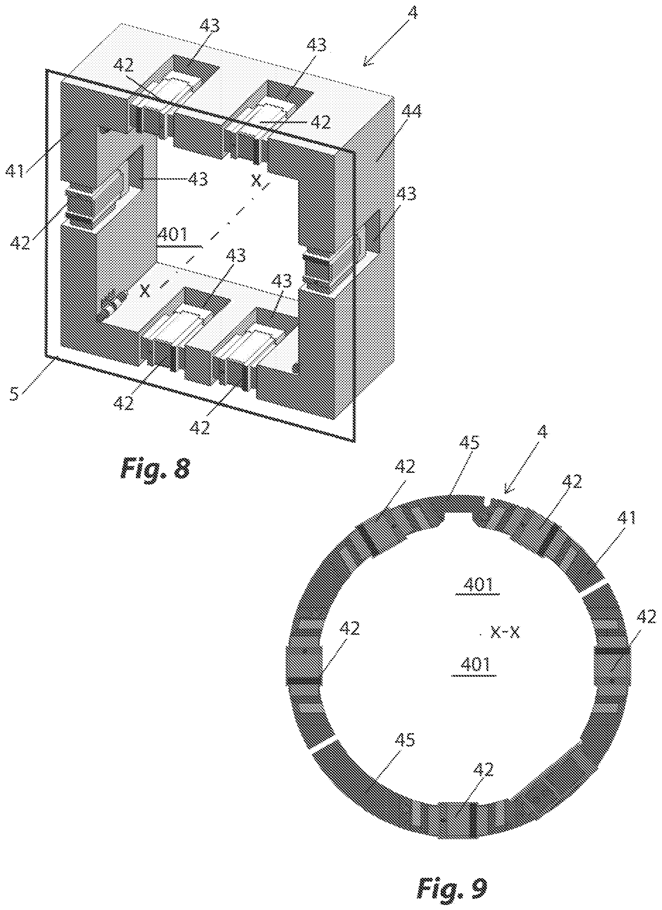

In the illustrated figures, the support element 40, which can be made of metallic material, optionally not ferromagnetic, in order to advantageously disperse the heat during the use of the gripping group of the invention, or can be made of another material suitable for the purpose, for example plastic, composite or other material not subject to magnetisation, has a substantially circular configuration in plan view and delimits a central through opening 401, but depending on the applications, in other embodiments of the gripping group according to the invention, the supporting element 40 can also have other configurations, for example it can be a full body (i.e., not delimiting a through opening) and/or can have a polygonal plan view configuration, for example a square one, as shown in Figure 8.

The electromagnets are advantageously mounted on the first face 41 of the support element 40, at optionally projecting portions thereof (see in particular Figures 6 and 7), wherein the aforesaid housing seats 43 are obtained, in such a way as to delimit a gripping plane 5 (see in particular Figure 6 and Figures 17 to 19) at their exposed ends of generation of a respective magnetic field.

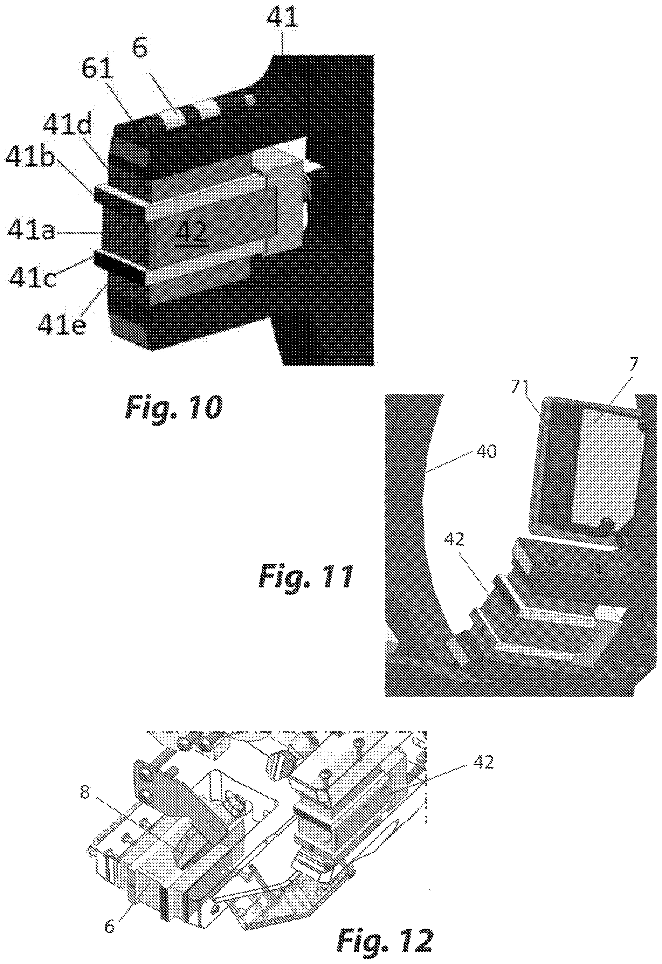

In this respect it should be noted that each electromagnet 42, as can be seen in particular in Figure 10, comprises one portion 41a including one coils winding sandwiched between two opposed parallel plate-shaped portions of ferromagnetic material 41b and 41c, configured to be magnetized with opposite sign, which in turn are comprised between two non-ferromagnetic plates, 41d and 41e, configured to enter into contact with the support element 40 for coupling therewith, for example by means of screws passing through suitable housing seats provided therein that are not visible in the figures. Each electromagnet 42, also comprises one terminal element 41f, made of non-ferromagnetic material, enclosing the ends of the two opposed parallel plate-shaped portions of ferromagnetic material 41b and 41c and the coils winding 41a, and together with the non-ferromagnetic plates 41d and 41e it is configured to act as a shield of the magnetic field produced, in use, by each electromagnet 42, so that the magnetic field produced is substantially exclusively located between the two portions of ferromagnetic material 41b and 41c (or positive and negative poles) of each single electromagnet 42, directed outwards, i.e. opposite to the terminal element 41f and the support element 40.

In any case, the person skilled in the art will have no difficulty in understanding how other embodiments can be conceived for the electromagnets 42, as long as they are configured to generate a magnetic field located at the aforesaid gripping plane 5. For example, in place of the electromagnets described above, magnetic tubes of the traditional type could be used.

Advantageously, in the electromagnets 42 the two portions of ferromagnetic material 41b and 41c, configured to be magnetized with opposite sign, are arranged parallel to each other and orthogonally with respect to a lateral surface 44 of the support element 40, in the specific case of circular plan section. In the case wherein the support element 40 had a plan configuration different from that shown in the Figures, the two portions of ferromagnetic material 41b and 41c, configured to be magnetized with opposite sign, will be arranged orthogonally with respect to a lateral surface of the solid which defines the envelope of the support element. As will be seen, this aspect of the arrangement of the portions of ferromagnetic material 41b and 41c, is particularly advantageous when the gripping head 4 is used for picking up tools 2 having reduced outer diameters. In fact, with the orthogonal arrangement (with respect to the lateral surface 44) of the portions of ferromagnetic material 41b and 41c, the lines of the corresponding magnetic field that can be generated are always able to cross the tool to be picked up at both poles and generate, then, on the tool 2, an attraction magnetic force.

Each electromagnet 42 is, in fact, advantageously configured to be placed at a respective region 211, 212, 213 or 214 of a tool 2 to be picked up, when such a tool is supported by a projecting shaft 3 and directed toward the gripping plane 5 with its gripping face 21.

In the enclosed figures, it will be appreciated that the gripping group 1 comprises, according to a particularly advantageous embodiment of the invention illustrated in Figures from 5 to 7, 9 and 14, five electromagnets 42 angularly displaced therebetween on the support element 40 around a symmetry axis x-x of the same support element. In any case, it is quite clear that in further embodiments of the gripping group according to the invention, the support element 40, besides having a different configuration depending on the type of application, as already mentioned above, can also support a different number of electromagnets 42 also arranged according to another arrangement (see Figure 8) provided that they delimit one gripping plane 5 with the two portions of ferromagnetic material 41b and 41c arranged orthogonally with respect to a lateral surface of the solid defining the envelope of the support element 40 and, in use, can be arranged at the respective regions of a gripping face 21 of a tool 2.

In the specific case, as can be seen from the comparison of Figures 4 and 5, the top electromagnets 421 and 422 are configured to be placed at the top region 211 of the tool 2, the central electromagnet 423 is configured to be placed at a central region 214 (to the right, in Figure 4) of the tool 2, the central electromagnet 424 is configured to be placed at the central region 213 (to the left, in Figure 4) of the tool 2 and the bottom electromagnet 425 is configured to be placed at the bottom region 212 of the tool 2.

The gripping group 1 of the present invention further comprises at least one data control and processing unit, not shown in the Figures, operatively connected to each of the electromagnets 42 and the electromagnets 42, when activated, can generate magnetic fields independent from each other, based on a respective signal of magnetization that such a data control and processing unit can send them.

As will be appreciated, this aspect is particularly advantageous in the case wherein the gripping group 1 is at a close distance, directed toward one tool 2, with the activated electromagnets 42, each directed toward a respective region of the gripping face 21 of the tool. In this case, it is evident that each region of the gripping face 21 can undergo one magnetic field and therefore be subject to an attraction magnetic force mainly depending on the intensity of the magnetic field generated by the respective electromagnet 42.

The distance between the gripping group 1 (in particular, between its gripping plane 5) and the gripping face 21 of the tool 2 that ensures that the tool 2 undergoes a magnetic force of attraction, clearly depends on the weight, the size and shape of the tool 2 to be picked up, the configuration of the grip head (the number of electromagnets 42 mounted thereon) and the intensity of the generated magnetic field. For standard applications, such a distance is typically comprised between 0.5 to 1.5 mm, optionally substantially equal to 1 mm.

Going back to the data control and processing unit and to the magnetization signal transmitted to the electromagnets 42, it should be noted that according to a first variant of the invention, the data control and processing unit is configured to transmit one single magnetization signal to all the electromagnets 42 of the gripping head 4, which selectively reaches one or more electromagnets 42 or none, depending on the location of corresponding switches, which are comprised between the data control and processing unit and each electromagnet 42 of the gripping head 4. The connection line which operatively connects the data control and processing unit to each magnet can comprise, then, as many switches as the electromagnets 42 are, each mounted upstream of the respective electromagnet 42, or a single switch having a single input and multiple outputs (as many as the electromagnets 42 are) which controls the selective transmission of the single signal transmitted by the data control and processing unit to those electromagnets 42. Between each switch or between the single switch and each electromagnet 42, the gripping group can also comprise a respective signal attenuator (not visible in the Figures), configured to adjust the intensity of the magnetization signal transmitted to the respective electromagnet 42.

Alternatively, the data control and processing unit is configured, instead, to transmit one independent magnetization signal to each electromagnet, for example through activation of the corresponding driver cards.

In any case, the data control and processing unit is configured to check each electromagnet 42 independently from one another, through one magnetization signal, whose waveform and/or duration and/or intensity o also depend on the distance of each electromagnet 42 from the tool 2 (from the respective face of the tool 2) and/or by the weight of the tool.

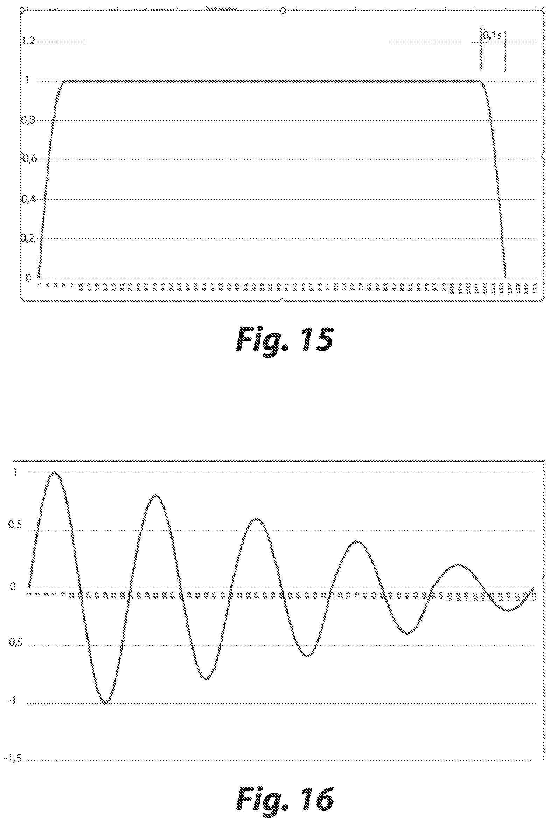

According to a preferred variant of the invention, the magnetization signal of each electromagnet 42 is a voltage signal, optionally a step signal which generates a constant magnetization current and a corresponding constant magnetic field. In the example shown in Figure 15, the magnetization signal has a time duration of few seconds and substantially constant intensity (not considering an initial and final transitional period), as represented in Figure 15.

The data control and processing unit is also configured to control each electromagnet 42 independently from one another (in the sense described above, with reference to the transmission of the magnetization signal) by means of a demagnetization alternating voltage signal, having decreasing intensity (i.e., modulated in amplitude with a decreasing intensity, optionally linearly) starting from a maximum intensity, optionally up to zero, having duration, maximum intensity and frequency that depend on the distance of each electromagnet 42 from the tool 2 and/or its weight. The demagnetization signal, which generates an alternating current and a corresponding alternating magnetic field for electromagnet 42, can have an even different waveform, for example this could be pulsed with alternated positive and negative pulses, with pwm or pam modulation, decreasing time duration and decreasing amplitude of the alternating pulses.

According to a preferred variant of the invention, the alternating demagnetization signal optionally comprises a waveform including an integer number of periods and has a time duration that is optionally less than the time (typically of the order of a few seconds) taken by a robot which comprised the gripping group 1, to move the picked up tool 2, in a respective releasing seat. The maximum intensity of the demagnetization signal is optionally greater than the intensity of the magnetization signal. Clearly, the alternating demagnetization signal can be applied to one tool 2, in contact with one or more electromagnets 42, in order to demagnetize it before its release in a subsequent work station.

According to an advantageous aspect of the invention, the support element 40 can be formed in a single piece or can comprise a plurality of portions 45, as shown for example for the third embodiment of the gripping group in Figure 9, which are configured to be coupled together in a removable manner and/or at an adjustable mutual distance, for example because each mounted on movable elements of the grasping end of a robot comprising the gripping group 1 of the invention, whereby the support element 40 can assume a first operating configuration, wherein the portions 45 are coupled together to form a single body delimiting said through opening 401, and (at least) a second operating configuration (not illustrated in the figures) wherein the portions 45 are, for example, linearly or radially spaced apart from each other, depending on the number of portions 45 and on their extension, and do not form a single body.

This aspect of the invention is particularly advantageous in the case wherein the gripping face 21 of the tool 2 to be picked up from the shaft 3 of the magazine has a greater extension than the front extension of the supporting element 40, whereby the electromagnets 42 could not be placed at any region of the gripping face 21 of the tool 2 to be picked up. The possibility for the support element 40 to change from the first to the second operating configuration, allows to adapt the extension based on the size of the gripping face 21 of the tool 2 to be picked up, avoiding the need to possibly replace the gripping group 1 each time it is necessary to pick up tools from the tool storage, having gripping faces of different size.

The gripping group 1 according to the present invention can also comprise one or more contact sensors 6, for example of the inductive or capacitive type, or comprising a pneumatic cylinder with connected pressure switch, etc., mounted on the support element 40, for example with their sensing end 61 at the gripping plane 5, delimited by the electromagnets 42. Those contact sensors 6 can for example be in a number corresponding to the number of electromagnets 42 or can be fewer. In any case, they are operatively connected to the data control and processing unit and configured to emit thereto at least one signal correlated to the occurred or not occurred contact between the tool 2 to be picked up from the shaft 3 and at least one electromagnet 42.

The gripping group 1 according to the present invention can also comprise one or more proximity sensors 7, optionally of the laser type, of the kind available on the market by SICK S.p.A., model n. OD1000-6001R15 or of another kind, optionally with direct reflection, provided that they are capable of determining a distance to one object supported by the support element 40, so as to place one sensing end 71 thereof toward the gripping plane 5. Such proximity sensors are operatively connected to the data control and processing unit and configured to emit thereto at least one signal correlated to the distance with respect to a tool 2 within their field of action.

The gripping group 1 according to the present invention can advantageously also comprise one or more air flow dispensing devices 8 supported by the support element 40 close to the gripping plane 5, so that one dispensing end 81 thereof is directed radially away from the symmetry axis x-x of the support element 40 toward a space region surrounding the gripping plane 5 and opposite to the supporting element 40. Those dispensing devices 8 are operatively connected to a respective source of flow (not shown in the drawings) and to the data control and processing unit, from which they receive corresponding activation-deactivation signals, and are configured to deliver at least one substantially radial air flow, optionally of the pressurised laminar type, so that when a tool 2 is located on the gripping plane 5, in close proximity to or in contact with another tool 2' on the storage projecting shaft 3 (see for example Figure 17), the delivered air flow can contribute to increase the distance between the tool 2 to be picked up and the other tool 2' near thereto or to separate the tool 2 to be picked up and the other tool 2' attached thereto, also eliminating from the other tool 2' any impurities that are on its gripping face 21.

In any case, the person of skill in the art will have no difficulty in understanding how the one or more air flow dispensing devices 8 described above can be included in a separating device completely independent from the gripping group 1 described above, which can be used in conjunction with a gripping system for tools of any type, for example of the mechanical or conventional magnetic type, such as that illustrated in the introduction.

Such a separating device, which also forms the subject of the present invention, is configured to promote the spacing between tools (2 and 2' in Figure 17) as described above, each having a configuration in plan view substantially circular or annular, around an orthogonal axis w-w, or other configuration, provided that they have a respective flat gripping face 21 and delimit a through opening 215 at the orthogonal axis w-w, at which through opening they are hung, juxtaposed, in contact or not therebetween, to a storage projecting shaft 3. The storage projecting shaft is in turn provided with an end 31 constrained, for example to a wall or to an upright rotatably mounted on a base, and an opposite free end 32, whereby the respective gripping faces 21 of such tools 2 are directed toward a free end 32 of the projecting shaft 3.

The separating device of the present invention (reference be made in particular to Figure 12) comprises, therefore, at least one support element and one or more air flow dispensing devices 8 supported by the support element, having respective dispensing end 81, and the support element and the one or more air flow dispensing devices 8 are configured so that the free end 81 of each air flow dispensing device 8 can be moved, in a use configuration, at the gripping face 21 of the tool 2 that is closer to the free end 32 of shaft 3, directed radially away with respect to the orthogonal axis w-w of the tool 2, toward a space region surrounding the same tool 2 and toward the constrained end 31 of the projecting shaft 3. The separating device of the present invention further comprises at least one source of air flow (not shown in the drawings), operatively connected to and in fluid communication with the one or more air flow dispensing devices 8. The separating device of the present invention also comprises one data control and processing unit, operatively connected both to the source of the air flow and to the one or more air flow dispensing devices 8, to which it sends corresponding both automatic and manual activation-deactivation signals. The one or more air flow dispensing devices 8 are configured to deliver, in response to an activation signal from the data control and processing unit, at least one substantially radial air flow, optionally of the laminar type under pressure, as described above, in order to facilitate separation between the tool 2 closest to the free end 32 of the shaft 3 and the other tool 2' juxtaposed thereto, in close proximity or in contact therewith, also eliminating from the other tool 2' any impurities that are present on its gripping face 21. In this respect, it should be noted that the two cutting tools 2, 2' can be in contact or at a very close distance therebetween, because of a thin layer of oil present on the tools themselves, or, in case of use of a magnetic gripping group as described in the present invention, because of the magnetization generated by the magnets of the gripping group, which inevitably is transmitted not only to the tool 2 to be picked up, closest to the free end 32 of the projecting shaft 3, but also to the tools close thereto, if they are made of metallic material.

According to a particularly preferred embodiment of the invention, the support element of the separating device is a support element of a gripping system, for example the support element 40 of the gripping group 1 described above. According to another embodiment of the invention, the support element of the separating device is a support element of a traditional mechanical gripping system, for example comprising a self-centering expander configured to expand radially at the opening 215 of the tool 2. In this case, the one or more air flow dispensing devices 8 can be directly supported by the jaws of the self-centering expander. According to yet another embodiment of the invention, the support element of the separating device is a support element of a traditional magnetic gripping system as described in the introduction.

According to a further embodiment of the invention, the support element of the separating device is an element completely separate from the gripping system for tools, but configured to be moved, in a use configuration, in the vicinity of the gripping system and of the flat gripping face 21 of the tool 2 that is closer to the free end 32 of storage projecting shaft 3 as described above.

The gripping group 1 of the present invention can advantageously also comprise one mechanical gripping device 9 for one tool 2 (see in particular Figures 13 and 14), housed at a space region comprised in the support element 40, optionally at the through opening 401 of the same (for the gripping head shown in Figure 9), at the through opening 401 of the support element 40 when the support element 40 is located in the first operating configuration, or at a space region between its portions 45, when the support element 40 is in its second operating configuration). The mechanical gripping device 9 is configured to be moved along one movement axis, e.g. coincident with or parallel to the symmetry axis x-x of the support element 40, between one rest position, wherein it is spaced from the gripping plane 5 of the gripping group (and retracted with respect to a tool 2 to be picked up) and a working position, wherein it is at the gripping plane 5 of the gripping group 1, to upload one tool 2, once the tool, as will be seen hereinafter, has been attracted by the electromagnets 42 of the gripping head 4 and is connected thereto, as a result of magnetic fields generated therefrom.

The gripping group 1 described above can in fact be easily employed for the implementation of a gripping method for one tool 2, and namely to pick up one tool 2 that, as indicated above, comprises at least one magnetizable material, has a respective gripping face 21 defining at least one plurality of regions (211, 212, 213, 214) and is supported by a shaft 3 projecting from a storage.

That method, in a first operating step A, comprises advancing along one movement direction y-y at least the gripping head 4 of the gripping group 1 as described above, toward the tool 2 supported by the shaft 3, with the gripping plane 5 directed toward the gripping face 21 of the tool, so that each electromagnet 42 is located at a respective region of the gripping face 21.

The method also provides (step B) to selectively activate, through the data control and processing unit of the gripping group 1, the electromagnets 42 so as to generate at each of them a respective magnetic field, in response to which each region of the gripping face 21 of the tool 2 undergoes a corresponding attraction magnetic force.

The intensity of the magnetic field generated at each region of the gripping face 21 depends on the type of magnetization signal transmitted, by the data control and processing unit, to each electromagnet 42 and can be determined in such a way that the corresponding produced attraction magnetic forces can move the tool 2 along the shaft 3 toward the gripping plane 5, substantially without changing the attitude of the tool on the shaft 3.

The method thus provides one step C of retraction of the gripping head 4 along the same movement direction y-y, whereby the tool 2 attracted by the gripping head 4 can be moved along the shaft 3 toward the free end 32 thereof, maintaining its original attitude, and can be brought to a predefined safety distance from other tools possibly supported on the same shaft 3, even if originally located at close distance.

The method also provides for one optional subsequent step D wherein, exceeded the predefined safety distance of tool 2 from any tools adjacent thereto on the shaft 3, selective activation of the electromagnets 42 is adjusted, so that the magnetic fields produced at each region of the gripping face 21 and the respective attraction magnetic forces make the attitude of the tool 2 to be picked up change, whereby this is positioned on the gripping plane 5 in contact with all the electromagnets 42 of the gripping head 4.

After step D, the method of the present invention comprises one step D1 of movement of the gripping head 4 along a substantially vertical direction, whereby the tool 2 attracted by the electromagnets 42 is raised substantially vertically with respect to the projecting shaft 3 and can be removed therefrom to be for example uploaded by a mechanical gripping device 9 and placed in a respective releasing seat.

As can be imagined, steps A and B described above can be carried out simultaneously or in sequence. According to a particularly advantageous aspect of the invention, step B of selective activation of the electromagnets 42 comprises activating the electromagnet alternatively or simultaneously therebetween, possibly with a (constant or variable) intensity of the magnetic field respectively generated by each electromagnet 42 equal or different to the (constant or variable) intensity of the magnetic field generated by one or more of the other electromagnets 42.

The electromagnets 42 can advantageously be activated alternatively in the case wherein the tool 2 is supported by the shaft 3, which is flexed downward, whereby the tool 2 as indicated in Figures 17 to 19 has its gripping face 21 closest to the gripping plane 5 of the gripping head 4 at its top region 211, the bottom region 212 being instead more retracted.

In this case, the simultaneous activation of the electromagnets 42 of the gripping group 2, whose gripping plane 5 is substantially vertical could cause a variation in the attitude of the tool 2 on the shaft and a likely collision with any tools adjacent thereto, located at a close distance therefrom (as shown in Figures 1-3).

By activating, instead, according to the method of the present invention, the top electromagnet or electromagnets (421, 422) directed toward the top region 211 of the tool 2 (step B) first, and by retracting (step C) the gripping head 4 in such a way as to drag toward the free end 32 of the shaft 3 of the tool 2 without changing its attitude, it is possible to space the tool 2 on the shaft 3 by other tools adjacent thereto to a safety distance, avoiding that collisions will occur between them and it is therefore possible to move the tool 2 on the gripping plane 5 of the gripping head 4 through the subsequent activation of other electromagnets (423, 424 and 425) of the gripping group 1 (step D).

Alternatively, the method of the present invention also provides for the simultaneous activation of all the electromagnets 42, but through application of different magnetization signals by the data control and processing unit, whereby the attraction magnetization force that is applied in the different regions of the gripping face 21 of the tool 2 is such that the tool can translate without varying its attitude and therefore it is possible to prevent it from colliding with other tools 2 adjacent thereto.

The mode of selective activation of the electromagnets 42 by the data control and processing unit can depend on the distance of each electromagnet 42 with respect to the corresponding region on the gripping face 21 of the tool 2 to be picked up. For this reason, the method also provides for one step A1, comprised between step A and B, or prior to step A, for measuring the distance of each electromagnet 42 with respect to the corresponding region of the gripping face 21 of the tool 2 to be picked up. This step can require the activation of one or more proximity sensors 7 mounted on the support element 40 and a corresponding processing of the signal sent by them by the data control and processing unit.

The method of the present invention can also comprise one step C1 for cleaning the tool 2 to be picked up, as well as separating other tools that can be attached to the tool 2 to be picked up, by the corresponding activation of the air flow dispensing device 8, before step D or in conjunction therewith.

The mode of selective activation of the electromagnets 42 by the data control and processing unit also allows to greatly reduce the effect of undesired magnetization of the tools that are adjacent to the tool to be picked up.

The method according to the present invention can also comprise one step E of demagnetization of the tool 2 in contact with the electromagnets 42 of the group 1, when this tool has for example, been uploaded by the mechanical gripping device 9. In this case, step E comprises the selective activation of the electromagnets 42 by sending respective demagnetization signals as described above.

In view of the above it is quite evident that the gripping group and the respective gripping method, according to the present invention, overcome the drawbacks described in the introduction. In fact, they provide for the possibility to selectively activate the electromagnets 42 of the gripping head 4 and then to implement a first translation of one tool 2 to be picked up along the respective shaft 3, without the tool changing its attitude, so that the tool can be brought to a safety distance with respect to any other tools supported by the same shaft, thus avoiding that it can collide with them during the pick up operations from the shaft.

In the foregoing the preferred embodiments were described and some modifications of the present invention have been suggested, but it should be understood that those skilled in the art can make modifications and changes without departing from the relative scope of protection, as defined by the appended claims.

## Claims

1. Gripping group (1) for at least one tool (2) comprising at least one magnetizable material, said tool (2) being configured to be supported by at least one projecting shaft (3) of one storage and having one respective gripping face (21), directed toward one free end (32) of said at least one projecting shaft (3), the gripping face delimiting at least one plurality of regions (211, 212, 203, 214), the gripping group (1) comprising:
- at least one gripping head (4) including:
- at least one support element (40), having a first face (41) configured to be directed toward said gripping face (21) of said tool (2);
- at least two electromagnets (42; 421, 422, 423, 424, 425), supported by said at least one support element (40), at said first face (41) thereof, and placed thereon in such a way as to delimit at least one gripping plane (5) at exposed ends thereof configured to generate one respective magnetic field, wherein when said at least one gripping plane (5) is directed toward the gripping face (21) of said tool (2) each one of the least two electromagnets (42; 421, 422, 423, 424, 425) is configured to be placed at one respective region of said plurality of regions (211, 212, 203, 214) of said gripping face (21) of said tool (2) and to generate said respective magnetic field toward the respective region of said gripping face (21) of said tool (2);
- at least one data control and processing unit operatively connected to said at least two electromagnets (42; 421, 422, 423, 424, 425);
**characterized in that**
said at least one data control and processing unit is configured to selectively activate said at least two electromagnets (42; 421, 422, 423, 424, 425) by sending respective magnetization signals, in response to which said at least two electromagnets (42; 421, 422, 423, 424, 425) are configured to generate said respective magnetic fields independently from one another.

2. Gripping group (1) according to claim 1, wherein said magnetization signal is one signal having a waveform and/or a duration and/or an intensity that depend on a distance of each electromagnet (42; 421, 422, 423, 424, 425) from the respective region (211, 212, 213, 214) of the gripping face (21) of said tool (2) and/or the weight of said tool (2).

3. Gripping group (1) according to claim 1 or 2, wherein said at least one data control and processing unit is configured to selectively activate said at least two electromagnets (42; 421, 422, 423, 424, 425) by sending respective demagnetization alternating signals having optionally linearly decreasing intensity, starting from a maximum intensity, optionally up to zero, having duration and/or maximum intensity and/or frequency depending on a distance of each electromagnet (42; 421, 422, 423, 424, 425) from the respective region (211, 212, 213, 214) of the gripping face (21) of said tool (2) and/or the weight of said tool (2).

4. Gripping group (1) according to any one of the previous claims, wherein said support element (40) comprises at least one lateral surface (44) and each electromagnet (42) comprises at least two portions of ferromagnetic material (41b, 41c), configured to be magnetized with opposite sign, arranged parallel to each other orthogonally with respect to said at least one lateral surface (44) of said support element (40).

5. Gripping group (1) according to any one of the previous claims, wherein said support element (40) comprises at least one plurality of portions (45) configured to be coupled with each other in a removable manner and/or at an adjustable mutual distance, said support element (40) being configured to have a first operating configuration, wherein the portions (45) of the plurality of portions are brought close to each other and form a single body, optionally delimiting one through opening (401), and at least one second working configuration, wherein the portions (45) of the plurality of portions are spaced apart.

6. Gripping group (1) according to any one of the previous claims, comprising at least one contact sensor (6), mounted on said support element (40) and operatively connected to said at least one data control and processing unit and configured to emit at least one signal toward said at least one data control and processing unit, correlated to one contact which has occurred or otherwise, between said at least one tool (2) and said at least one respective electromagnet (42; 421, 422, 423, 424, 425).

7. Gripping group (1) according to any one of the previous claims, comprising at least one proximity sensor (7), optionally of the laser type, supported by said support element (40) and operatively connected to said at least one data control and processing unit and configured to emit at least one signal toward said at least one data control and processing unit, related to one distance from said at least one tool (2).

8. Gripping group (1) according to any one of the previous claims, comprising at least one flow delivery device (8), supported by said support element (40) in proximity of said at least one gripping plane (5), in such a way that one delivery end thereof is directed radially away from one axis of symmetry x-x of said at least one support element (40), toward one space region, surrounding the said at least one gripping plane (5), the space region being opposite to said at least one support element (40), said at least one delivery device (8) being operatively connected to said at least one data control and processing unit and configured to deliver at least one air flow of the laminar type so that, when said at least one tool (2) is at said at least one gripping plane (5), close to or in contact with at least one other tool on said at least one projecting shaft (3), the delivered air flow can contribute to increase the distance between said at least one tool (2) and said at least one other tool close thereto or can contribute to separate said at least one tool (2) and said at least one other tool attached thereto, also eliminating from said at least one other tool any impurity present on its gripping face (21) toward said gripping plane (5).

9. Gripping group (1) according to any one of the previous claims, comprising at least one mechanical gripping device (9) for said tool (2) configured to be moved along a moving axis between a rest position, wherein it is at a distance from said gripping plane (5) of said gripping head (4), and one working position, wherein it is located at said gripping plane (5) of said gripping head (4).

10. Method for gripping at least one tool (2), comprising at least one magnetizable material, by means of a gripping group (1) according to any one of claims 1 to 9, said tool (2) being supported by at least one shaft (3) projecting from a storage and having a respective gripping face (21) delimiting at least one plurality of regions (211, 212, 213, 214), the gripping method comprising the following operational steps:
A. advancing along a movement direction y-y said at least one gripping head (4), with said gripping plane (5) facing said gripping face (21) of said tool (2) so that said at least two electromagnets (42; 421, 422, 423, 424, 425) are each at a respective region of said at least one plurality of regions (211, 212, 213, 214) of said gripping face (21);
B. selectively activating, by means of said at least one data control and processing unit, said at least two electromagnets (42; 421, 422, 423, 424, 425) in such a way that each one generates, at the corresponding region of said gripping face (21), a respective magnetic field and each region undergoes a respective attraction magnetic force as an effect of the respective magnetic field, each attractive magnetic force being configured not to change an attitude of said tool (2) on said projecting shaft (3) and translating said tool (2) on said projecting shaft (3);
C. retracting along said movement direction y-y said at least one gripping head (4) thereby causing said tool (2) to translate on said projecting shaft (3) toward said gripping head (4) substantially without changing its attitude.

11. Method according to claim 10, wherein said step B comprises selectively activating said at least two electromagnets (42; 421, 422, 423, 424, 425) alternatively or simultaneously.

12. Method according to claim 10 or 11, wherein said step B comprises alternatively selectively activating said at least two electromagnets (42; 421, 422, 423, 424, 425) based on their distance from the respective regions (211, 212, 203, 214) of said gripping face (21) of said tool (2).

13. Method according to any one of claims 10 to 12, wherein said step B comprises simultaneously selectively activating said at least two electromagnets (42; 421, 422, 423, 424, 425) by applying to each one, by means of said data control and processing unit, a respective distinct magnetization signal, whereby the magnetic attraction force applied to the respective regions of said gripping face (21) of said tool (2) causes said tool (2) to translate on said projecting shaft (3) without varying its attitude.

14. Method according to any one of claims 10 to 13, comprising a subsequent step D of selective activation of said electromagnets (42; 421, 422, 423, 424, 425), when said tool (2) has travelled on said projecting shaft (3) at least one predefined safety distance, said selective activation of said electromagnets (42; 421, 422, 423, 424, 425) causing the change of said attitude of said tool (2), whereby it moves on the gripping plane (5) into contact with each one of said electromagnets (42; 421, 422, 423, 424, 425) of said gripping head (4).

15. Method according to any one of claims 10 to 14, comprising one step A1, prior to step B, of measuring the distance of each electromagnet (42; 421, 422, 423, 424, 425) with respect to the corresponding region of said gripping face (21) of said tool (2) to be gripped, said step optionally comprising the activation of said at least one proximity sensor (7).

16. Method according to any one of claims 10 to 15, comprising one step C1 of cleaning said tool (2) to be gripped and spacing it with respect to another tool near or into contact thereto, preliminary to or in conjunction with said step D, comprising the activation of said flow delivery device (8).

17. Method according to any one of claims 10 to 16, comprising one step E of demagnetization of said tool (2), when into contact with said electromagnets (42) of said gripping head (4), comprising the selective activation of said electromagnets (42) by sending respective demagnetisation signals.

## Patentansprüche

1. Greifergruppe (1) für mindestens ein Werkzeug (2), das mindestens ein magnetisierbares Material umfasst, wobei das Werkzeug (2) so konfiguriert ist, dass es von mindestens einer vorstehenden Welle (3) eines Speichers getragen wird, und jeweils eine Greiffläche (21) aufweist, die zu einem freien Ende (32) der mindestens einen vorstehenden Welle (3) gerichtet ist, wobei die Greiffläche mindestens eine Vielzahl von Bereichen (211, 212, 203, 214) begrenzt, wobei die Greifgruppe (1) umfasst:
- mindestens einen Greiferkopf (4), der Folgendes umfasst:
- mindestens ein Stützelement (40), das eine erste Fläche (41) aufweist, die so gestaltet ist, dass sie auf die Greiffläche (21) des Werkzeugs (2) gerichtet ist;
- mindestens zwei Elektromagneten (42; 421, 422, 423, 424, 425), die von dem mindestens einen Trägerelement (40) an dessen erster Fläche (41) getragen werden und darauf so angeordnet sind, dass sie mindestens eine Greifebene (5) an ihren freiliegenden Enden begrenzen, die so konfiguriert ist, dass sie ein jeweiliges Magnetfeld erzeugt, wobei, wenn die mindestens eine Greifebene (5) auf die Greiffläche (21) des Werkzeugs (2) gerichtet ist, jeder der mindestens zwei Elektromagneten (42; 421, 422, 423, 424, 425) so konfiguriert ist, dass er an einem jeweiligen Bereich der Vielzahl von Bereichen (211, 212, 203, 214) der Greiffläche (21) des Werkzeugs (2) angeordnet wird und das jeweilige Magnetfeld in Richtung des jeweiligen Bereichs der Greiffläche (21) des Werkzeugs (2) erzeugt;
- mindestens eine Datensteuerungs-und-verarbeitungseinheit, die operativ mit den mindestens zwei Elektromagneten (42; 421, 422, 423, 424, 425) verbunden ist;
**dadurch gekennzeichnet, dass**
die mindestens eine Datensteuerungs-und-verarbeitungseinheit so konfiguriert ist, dass sie die mindestens zwei Elektromagnete (42; 421, 422, 423, 424, 425) selektiv aktiviert, indem sie jeweilige Magnetisierungssignale sendet, woraufhin die mindestens zwei Elektromagnete (42; 421, 422, 423, 424, 425) so konfiguriert sind, dass sie die jeweiligen Magnetfelder unabhängig voneinander erzeugen.

2. Greifergruppe (1) nach Anspruch 1, wobei das Magnetisierungssignal ein Signal mit einer Wellenform und/oder einer Dauer und/oder einer Intensität ist, die von einem Abstand jedes Elektromagneten (42; 421, 422, 423, 424, 425) von dem jeweiligen Bereich (211, 212, 213, 214) der Greiffläche (21) des Werkzeugs (2) und/oder dem Gewicht des Werkzeugs (2) abhängen.

3. Greifergruppe (1) nach Anspruch 1 oder 2, wobei die mindestens eine Datensteuerungs-und-verarbeitungseinheit so konfiguriert ist, dass sie die mindestens zwei Elektromagnete (42; 421, 422, 423, 424, 425) selektiv aktiviert, indem sie jeweilige Entmagnetisierungs-Wechselsignale mit gegebenenfalls linear abnehmende Intensität, ausgehend von einer maximalen Intensität, gegebenenfalls bis zu Null, mit einer Dauer und/oder maximalen Intensität und/oder Frequenz, die von einem Abstand jedes Elektromagneten (42; 421, 422, 423, 424, 425) von dem jeweiligen Bereich (211, 212, 213, 214) der Greiffläche (21) des Werkzeugs (2) und/oder dem Gewicht des Werkzeugs (2) abhängt.

4. Greifergruppe (1) nach einem der vorhergehenden Ansprüche, wobei das Trägerelement (40) mindestens eine Seitenfläche (44) aufweist und jeder Elektromagnet (42) mindestens zwei Abschnitte aus ferromagnetischem Material (41b, 41c) aufweist, die so gestaltet sind, dass sie mit entgegengesetztem Vorzeichen magnetisiert werden können, und die parallel zueinander orthogonal in Bezug auf die mindestens eine Seitenfläche (44) des Trägerelements (40) angeordnet sind.

5. Greifergruppe (1) nach einem der vorhergehenden Ansprüche, wobei das Stützelement (40) mindestens eine Vielzahl von Abschnitten (45) umfasst, die so konfiguriert sind, dass sie in einer entfernbaren Weise und/oder in einem einstellbaren gegenseitigen Abstand miteinander gekoppelt werden können, wobei das Stützelement (40) so konfiguriert ist, dass es eine erste Betriebskonfiguration, bei der die Abschnitte (45) der Vielzahl von Abschnitten nahe aneinander gebracht werden und einen einzigen Körper bilden, der optional eine Durchgangsöffnung (401) begrenzt, und mindestens eine zweite Arbeitskonfiguration aufweist, bei der die Abschnitte (45) der Vielzahl von Abschnitten voneinander beabstandet sind.

6. Greifergruppe (1) nach einem der vorhergehenden Ansprüche, die mindestens einen Kontaktsensor (6) umfasst, der an dem Trägerelement (40) angebracht ist und funktionell mit der mindestens einen Datensteuerungs-und-verarbeitungseinheit verbunden ist und so konfiguriert ist, dass er mindestens ein Signal an die mindestens eine Datensteuerungs-und-verarbeitungseinheit sendet, das mit einem Kontakt korreliert, der zwischen dem mindestens einen Werkzeug (2) und dem mindestens einen jeweiligen Elektromagneten (42; 421, 422, 423, 424, 425) stattgefunden hat oder nicht.

7. Greifergruppe (1) nach einem der vorhergehenden Ansprüche, umfassend mindestens einen Näherungssensor (7), gegebenenfalls vom Lasertyp, der von dem Trägerelement (40) getragen wird und funktionell mit der mindestens einen Datensteuerungs-und-verarbeitungseinheit verbunden ist und so konfiguriert ist, dass er mindestens ein Signal in Richtung der mindestens einen Datensteuerungs-und-verarbeitungseinheit aussendet, das mit einem Abstand zu dem mindestens einen Werkzeug (2) in Beziehung steht.

8. Greifergruppe (1) nach einem der vorhergehenden Ansprüche, die mindestens eine Strömungsabgabevorrichtung (8) umfasst, die von dem Trägerelement (40) in der Nähe der mindestens einen Greifebene (5) so getragen wird, dass ein Abgabeende davon radial von einer Symmetrieachse x-x des mindestens einen Trägerelements (40) weg in Richtung eines Raumbereichs gerichtet ist, der die mindestens eine Greifebene (5) umgibt, wobei der Raumbereich gegenüber dem mindestens einen Trägerelement (40), wobei die mindestens eine Zuführungsvorrichtung (8) mit der mindestens einen Datensteuerungs-und-verarbeitungseinheit funktional verbunden und so konfiguriert ist, dass sie mindestens einen Luftstrom des laminaren Typs zuführt, so dass, wenn sich das mindestens eine Werkzeug (2) auf der mindestens einen Greifebene (5) in der Nähe von oder in Kontakt mit mindestens einem anderen Werkzeug auf der mindestens einen vorstehenden Welle (3) befindet, der zugeführte Luftstrom dazu beitragen kann, den Abstand zwischen dem mindestens einen Werkzeug (2) und dem mindestens einen anderen Werkzeug in dessen Nähe zu vergrößern, oder dazu beitragen kann, das mindestens eine Werkzeug (2) und das mindestens eine andere daran befestigte Werkzeug zu trennen, wobei auch von dem mindestens einen anderen Werkzeug jegliche Verunreinigung, die auf seiner Greiffläche (21) in Richtung der Greifebene (5) vorhanden ist, entfernt wird.

9. Greifergruppe (1) nach einem der vorhergehenden Ansprüche, umfassend mindestens eine mechanische Greifvorrichtung (9) für das Werkzeug (2), die so konfiguriert ist, dass sie entlang einer Bewegungsachse zwischen einer Ruheposition, in der sie sich in einem Abstand von der Greifebene (5) des Greifkopfes (4) befindet, und einer Arbeitsposition, in der sie sich in der Greifebene (5) des Greifkopfes (4) befindet, bewegt werden kann.

10. Verfahren zum Greifen mindestens eines Werkzeugs (2), das mindestens ein magnetisierbares Material aufweist, mittels einer Greifgruppe (1) nach einem der Ansprüche 1 bis 9, wobei das Werkzeug (2) von mindestens einer aus einem Speicher herausragenden Welle (3) getragen wird und jeweils eine Greiffläche (21) aufweist, die mindestens eine Mehrzahl von Bereichen (211, 212, 213, 214) begrenzt, wobei das Greifverfahren die folgenden Arbeitsschritte umfasst:
A. Vorschieben des mindestens einen Greifkopfs (4) entlang einer Bewegungsrichtung y-y, wobei die Greifebene (5) der Greiffläche (21) des Werkzeugs (2) zugewandt ist, so dass sich die mindestens zwei Elektromagnete (42; 421, 422, 423, 424, 425) jeweils in einem entsprechenden Bereich der mindestens einen Mehrzahl von Bereichen (211, 212, 213, 214) der Greiffläche (21) befinden;
B. selektives Aktivieren der mindestens einen Datensteuerungs-und-verarbeitungseinheit mit Hilfe der mindestens einen mindestens zwei Elektromagneten (42; 421, 422, 423, 424, 425) derart, dass jeder in dem entsprechenden Bereich der Greiffläche (21) ein jeweiliges Magnetfeld erzeugt und jeder Bereich eine jeweilige magnetische Anziehungskraft als Wirkung des jeweiligen Magnetfeldes erfährt, wobei jede magnetische Anziehungskraft so gestaltet ist, dass sie eine Lage des Werkzeugs (2) auf der vorstehenden Welle (3) nicht verändert und das Werkzeug (2) auf der vorstehenden Welle (3) verschiebt;
C. Zurückziehen des mindestens einen Greifkopfs (4) entlang der Bewegungsrichtung y-y, wodurch das Werkzeug (2) auf dem vorstehenden Schaft (3) in Richtung des Greifkopfs (4) verschoben wird ohne seine Haltung zu ändern.

11. Verfahren nach Anspruch 10, wobei der Schritt B das selektive Aktivieren der mindestens zwei Elektromagneten (42; 421, 422, 423, 424, 425) abwechselnd oder gleichzeitig umfasst.

12. Verfahren nach Anspruch 10 oder 11, wobei der Schritt B das alternative selektive Aktivieren der mindestens zwei Elektromagneten (42; 421, 422, 423, 424, 425) auf der Grundlage ihres Abstands von den jeweiligen Bereichen (211, 212, 203, 214) der Greiffläche (21) des Werkzeugs (2) umfasst.

13. Verfahren nach einem der Ansprüche 10 bis 12, wobei der Schritt B das gleichzeitige selektive Aktivieren der mindestens zwei Elektromagneten (42; 421, 422, 423, 424, 425) umfasst, indem an jeden mittels der Datensteuereinheit und der Verarbeitungseinheit ein jeweils unterschiedliches Magnetisierungssignal angelegt wird, wodurch die auf die jeweiligen Bereiche der Greiffläche (21) des Werkzeugs (2) ausgeübte magnetische Anziehungskraft bewirkt, dass sich das Werkzeug (2) auf der vorstehenden Welle (3) verschiebt, ohne seine Lage zu verändern.

14. Verfahren nach einem der Ansprüche 10 bis 13, umfassend einen anschließenden Schritt D der selektiven Aktivierung der Elektromagneten (42; 421, 422, 423, 424, 425), wenn sich das Werkzeug (2) auf der vorstehenden Welle (3) um mindestens einen vorbestimmten Sicherheitsabstand bewegt hat, wobei die selektive Aktivierung der Elektromagneten (42; 421, 422, 423, 424, 425) die Änderung der Lage des Werkzeugs (2) bewirkt, wodurch es sich auf der Greifebene (5) in Kontakt mit jedem der Elektromagneten (42; 421, 422, 423, 424, 425) des Greifkopfs (4) bewegt.

15. Verfahren nach einem der Ansprüche 10 bis 14, das einen Schritt A1 vor dem Schritt B umfasst, in dem der Abstand jedes Elektromagneten (42; 421, 422, 423, 424, 425) in Bezug auf den entsprechenden Bereich der Greiffläche (21) des zu greifenden Werkzeugs (2) gemessen wird, wobei dieser Schritt gegebenenfalls die Aktivierung des mindestens einen Näherungssensors (7) umfasst.

16. Verfahren nach einem der Ansprüche 10 bis 15, umfassend einen Schritt C1 zum Reinigen des zu greifenden Werkzeugs (2) und zum Beabstanden desselben in Bezug auf ein anderes Werkzeug in der Nähe oder in Kontakt damit, vor oder in Verbindung mit dem Schritt D, der die Aktivierung der Strömungsabgabevorrichtung (8) umfasst.

17. Verfahren nach einem der Ansprüche 10 bis 16, umfassend einen Schritt E der Entmagnetisierung des Werkzeugs (2), wenn es in Kontakt mit den Elektromagneten (42) des Greifkopfs (4) ist, umfassend die selektive Aktivierung der Elektromagnete (42) durch Senden entsprechender Entmagnetisierungssignale.

## Revendications

1. Groupe de préhension (1) pour au moins un outil (2) comprenant au moins un matériau magnétisable, ledit outil (2) étant conçu pour être supporté par au moins un arbre saillant (3) d'un stockage et présentant une face de préhension respective (21), dirigée vers une extrémité libre (32) dudit au moins un arbre saillant (3), la face de préhension délimitant au moins une pluralité de régions (211, 212, 203, 214), le groupe de préhension (1) comprenant:
- au moins une tête de préhension (4) comprenant:
- au moins un élément de support (40), ayant une première face (41) conçue pour être dirigée vers ladite face de préhension (21) dudit outil (2);
- au moins deux électroaimants (42; 421, 422, 423, 424, 425), supportés par ledit au moins un élément de support (40), au niveau de ladite première face (41) de celui-ci, et placés sur celui-ci de manière à délimiter au moins un plan de préhension (5) au niveau des extrémités exposées de ce dernier, conçus pour générer un champ magnétique respectif, où lorsque ledit au moins un plan de préhension (5) est dirigé vers la face de préhension (21) dudit outil (2), chacun des au moins deux électroaimants (42; 421, 422, 423, 424, 425) est conçu pour être placé dans une région respective de ladite pluralité de régions (211, 212, 203, 214) de ladite face de préhension (21) dudit outil (2) et pour générer ledit champ magnétique respectif vers la région respective de ladite face de préhension (21) dudit outil (2);
- au moins une unité de commande et de traitement de données fonctionnellement connectée auxdits au moins deux électroaimants (42; 421, 422, 423, 424, 425);
**caractérisé en ce que**
ladite au moins une unité de commande et de traitement de données est conçue pour activer sélectivement lesdits au moins deux électroaimants (42; 421, 422, 423, 424, 425) en envoyant les signaux de magnétisation respectifs, en réponse desquels lesdits au moins deux électroaimants (42; 421, 422, 423, 424, 425) sont conçus pour générer lesdits champs magnétiques respectifs indépendamment l'un de l'autre ou les uns des autres.

2. Groupe de préhension (1) selon la revendication 1, où ledit signal de magnétisation est un signal ayant une forme d'onde et/ou une durée et/ou une intensité qui dépendent d'une distance de chaque électroaimant (42; 421, 422, 423, 424, 425) par rapport à la région respective (211, 212, 213, 214) de la face de préhension (21) dudit outil (2) et/ou du poids dudit outil (2).

3. Groupe de préhension (1) selon la revendication 1 ou 2, où ladite au moins une unité de commande et de traitement de données est conçue pour activer sélectivement lesdits au moins deux électroaimants (42; 421, 422, 423, 424, 425) en envoyant des signaux alternatifs de démagnétisation respectifs ayant optionnellement une intensité décroissante linéairement, depuis une intensité maximale, optionnellement jusqu'à zéro, ayant une durée et/ou une intensité maximale et/ou une fréquence dépendant d'une distance de chaque électroaimant (42; 421, 422, 423, 424, 425) par rapport à la région respective (211, 212, 213, 214) de la face de préhension (21) dudit outil (2) et/ou du poids dudit outil (2).

4. Groupe de préhension (1) selon l'une quelconque des revendications précédentes, où ledit élément de support (40) comprend au moins une surface latérale (44) et chaque électroaimant (42) comprend au moins deux portions de matériau ferromagnétique (41b, 41c), conçues pour être aimantées avec un signe opposé, agencées parallèlement l'une à l'autre orthogonalement par rapport à ladite au moins une surface latérale (44) dudit élément de support (40).

5. Groupe de préhension (1) selon l'une quelconque des revendications précédentes, où ledit élément de support (40) comprend au moins une pluralité de parties (45) conçues pour être couplées les unes aux autres de manière amovible et/ou à une distance mutuelle réglable, ledit élément de support (40) étant conçu pour avoir une première configuration de fonctionnement, où les portions (45) de la pluralité de portions sont rapprochées les unes des autres et forment un corps unique, délimitant optionnellement une ouverture traversante (401), et au moins une deuxième configuration de travail, où les parties (45) de la pluralité de parties sont espacées.

6. Groupe de préhension (1) selon l'une quelconque des revendications précédentes, comprenant au moins un capteur de contact (6), monté sur ledit élément de support (40) et fonctionnellement connecté à ladite au moins une unité de commande et de traitement de données et conçu pour émettre au moins un signal vers ladite au moins une unité de commande et de traitement de données, corrélé à un contact survenu ou non, entre ledit au moins un outil (2) et ledit au moins un électroaimant respectif (42; 421, 422, 423, 424, 425) .

7. Groupe de préhension (1) selon l'une quelconque des revendications précédentes, comprenant au moins un capteur de proximité (7), optionnellement de type laser, supporté par ledit élément de support (40) et fonctionnellement connecté à ladite au moins une unité de commande et de traitement de données et conçu pour émettre au moins un signal vers ladite au moins une unité de commande et de traitement de données, lié à une distance dudit au moins un outil (2).

8. Groupe de préhension (1) selon l'une quelconque des revendications précédentes, comprenant au moins un dispositif de distribution de débit (8), supporté par ledit élément de support (40) à proximité dudit au moins un plan de préhension (5), de sorte qu'une extrémité de distribution de celui-ci est dirigée radialement à l'opposé d'un axe de symétrie x-x dudit au moins un élément de support (40), vers une région spatiale, entourant ledit au moins un élément de préhension plan (5), la région spatiale étant à l'opposé dudit au moins un élément de support (40), ledit au moins un dispositif de distribution (8) étant fonctionnellement connecté à ladite au moins une unité de commande et de traitement de données et conçu pour distribuer au moins un flux d'air de type laminaire de sorte que, lorsque ledit au moins un outil (2) est au niveau dudit au moins un plan de préhension (5), à proximité ou en contact avec au moins un autre outil sur ledit au moins un arbre saillant (3), le flux d'air distribué peut contribuer à augmenter la distance entre ledit au moins un outil (2) et ledit au moins un autre outil à proximité de ce dernier ou peut contribuer à séparer ledit au moins un outil (2) et ledit au moins un autre outil attaché à celui-ci, éliminant également dudit au moins un autre outil toute impureté présente sur sa face de préhension (21) vers ledit plan de préhension (5).

9. Groupe de préhension (1) selon l'une quelconque des revendications précédentes, comprenant au moins un dispositif de préhension mécanique (9) dudit outil (2) conçu pour être déplacé selon un axe mobile entre une position de repos, où il est à distance dudit plan de préhension (5) de ladite tête de préhension (4), et une position de travail, où il est situé au niveau dudit plan de préhension (5) de ladite tête de préhension (4).

10. Procédé de préhension d'au moins un outil (2), comprenant au moins un matériau magnétisable, au moyen d'un groupe de préhension (1) selon l'une quelconque des revendications 1 à 9, ledit outil (2) étant supporté par au moins un arbre (3) faisant saillie d'un stockage et présentant une face de préhension respective (21) délimitant au moins une pluralité de régions (211, 212, 213, 214), le procédé de préhension comprenant les étapes de fonctionnement suivantes:
A. avancer le long d'une direction de déplacement y-y ladite au moins une tête de préhension (4), avec ledit plan de préhension (5) faisant face à ladite face de préhension (21) dudit outil (2) de sorte que lesdits au moins deux électroaimants (42; 421, 422, 423, 424, 425) se trouvent chacun dans une région respective de ladite au moins une pluralité de régions (211, 212, 213, 214) de ladite face de préhension (21);
B. activer sélectivement, au moyen de ladite au moins une unité de commande et de traitement de données, lesdits au moins deux électroaimants (42; 421, 422, 423, 424, 425) de telle sorte que chacun génère, au niveau de la région correspondante de ladite face de préhension (21), un champ magnétique respectif et chaque région subit une force magnétique d'attraction respective sous l'effet du champ magnétique respectif, chaque force magnétique d'attraction étant configurée pour ne pas modifier une attitude dudit outil (2) sur ledit arbre saillant (3) et translatant ledit outil (2) sur ledit arbre en saillie (3);
C. rétracter le long de ladite direction de déplacement y-y ladite au moins une tête de préhension (4) provoquant ainsi la translation dudit outil (2) sur ledit arbre en saillie (3) vers ladite tête de préhension (4) sensiblement sans changer d'attitude.

11. Procédé selon la revendication 10, où ladite étape B comprend l'activation sélective desdits au moins deux électroaimants (42; 421, 422, 423, 424, 425) alternativement ou simultanément.

12. Procédé selon la revendication 10 ou 11, où ladite étape B comprend alternativement l'activation sélective desdits au moins deux électroaimants (42; 421, 422, 423, 424, 425) en fonction de leur distance par rapport aux régions respectives (211, 212, 203, 214) de ladite face de préhension (21) dudit outil (2).

13. Procédé selon l'une quelconque des revendications 10 à 12, où ladite étape B comprend l'activation sélective simultanée desdits au moins deux électroaimants (42; 421, 422, 423, 424, 425) en appliquant à chacun, au moyen de ladite unité de commande et de traitement de données, un signal de magnétisation distinct respectif, de sorte que la force d'attraction magnétique appliquée aux régions respectives de ladite face de préhension (21) dudit outil (2) amène ledit outil (2) à translater sur ledit arbre saillant (3) sans faire varier son attitude.

14. Procédé selon l'une quelconque des revendications 10 à 13, comprenant une étape ultérieure D d'activation sélective desdits électroaimants (42; 421, 422, 423, 424, 425), lorsque ledit outil (2) a parcouru sur ledit arbre en saillie (3) au moins une distance de sécurité prédéfinie, ladite activation sélective desdits électroaimants (42; 421, 422, 423, 424, 425) provoquant le changement de ladite attitude dudit outil (2), de sorte qu'il se déplace sur le plan de préhension (5) au contact de chacun desdits électroaimants (42; 421, 422, 423, 424, 425) de ladite tête de préhension (4).

15. Procédé selon l'une quelconque des revendications 10 à 14, comprenant une étape A1, préalable à étape B, de mesure de la distance de chaque électroaimant (42; 421, 422, 423, 424, 425) par rapport à la région correspondante de ladite face de préhension (21) dudit outil (2) à saisir, ladite étape comprenant optionnellement l'activation dudit au moins un capteur de proximité (7).

16. Procédé selon l'une quelconque des revendications 10 à 15, comprenant une étape C1 de nettoyage dudit outil (2) devant être saisi et d'éloignement de ce dernier par rapport à un autre outil à proximité ou en contact avec celui-ci, préalablement à ou en conjonction avec ladite étape D, comprenant l'activation dudit dispositif de distribution d'écoulement (8).

17. Procédé selon l'une quelconque des revendications 10 à 16, comprenant une étape E de démagnétisation dudit outil (2), lorsqu'il est en contact avec lesdits électroaimants (42) de ladite tête de préhension (4), comprenant l'activation sélective desdits électroaimants (42) en envoyant des signaux de démagnétisation respectifs.
